# EUROPEAN PATENT SPECIFICATION

(11) **EP 2 917 057 B1**
(45) Date of publication and mention of the grant of the patent: **14.06.2017**
(21) Application number: 13794955.8
(22) Date of filing: 05.11.2013
(51) Int. Cl.: B60J 10/40, B60J 10/86, B60J 5/04

(54) **DOOR SYSTEM**
TÜRSYSTEM
SYSTÈME DE PORTES

(30) Priority: 06.11.2012 GB 201219975
(43) Date of publication of application: 16.09.2015
(73) Proprietor: ALEXANDER DENNIS LIMITED, Falkirk FK1 4JB (GB)
(72) Inventor: WINTER, Kevin, Scarborough Yorkshire YO11 3BY (GB); BULMER, Vaugn, Scarborough Yorkshire YO11 3BY (GB); STEPHENSON, Robin, Scarborough Yorkshire YO11 3BY (GB)
(74) Representative: Rankin, Douglas
(86) International application number: PCT/GB2013/052890
(87) International publication number: WO 2014/072696

(56) References cited:
- WO-A1-99/41098
- DE-U1- 9 406 445

## Description

### Technical Field

The invention relates to the field of passenger service vehicles. In particular, but not exclusively, the invention relates to door systems for passenger service vehicles, as well as associated apparatus, structures and methods.

The term passenger service vehicle may encompass buses, coaches, or the like, or other such road vehicles for transport of passengers.

### Background

Significant innovation and technology development has occurred in recent years in relation to the design of passenger service vehicles. In particular, there has been a continued drive towards providing vehicles that allow for improved passenger capacity, aesthetic styling and ergonomics, while at the same time maintaining or improving the safety of passengers using those vehicles.

Some such vehicles can be considered to comprise various levels, or decks, having passenger seating. Access to the vehicle is typically provided via a front service door. In addition to having a front service door, there can be a desire to provide an emergency door, suitable for use in the event of an emergency, which sometimes is towards the rear of the vehicle. WO 99/41098 (Gummi Welz) discloses a rubber elastic seal, especially for internal hinged doors in vehicles.

This background serves only to set a scene to allow a skilled reader to better appreciate the following description. Therefore, none of the above discussion should necessarily be taken as an acknowledgement that that discussion is part of the state of the art or is common general knowledge. One or more aspects/embodiments of the invention may or may not address one or more of the background issues.

### Summary

According to a first aspect of the invention, there is provided a door system, and passenger door, for a passenger service vehicle.

The door system may comprise a passenger door having a first door leaf and second door leaf. In some examples, one leaf can operate mainly as a service door, while the other can operate as an emergency door, even in a non-powered mode of operation. Such a configuration can improve the safety of such vehicles, while at the same time reducing the need to have multiple doors throughout the vehicle, and so potentially increasing the passenger area (e.g. to provide more passenger space and/or increasing capacity).

The passenger door of the door system may provide passenger access to and from a vehicle. The passenger door may have an interior and an exterior, and may comprise a first door leaf and second door leaf. Each of the first door leaf and the second door leaf may have a closed configuration and an open configuration, where the open configuration opens towards the exterior of the door.

In some examples, at least a portion of the first door leaf may overlap exteriorly with the second door leaf when both leafs are in a closed configuration. In those cases, the system may be configured such that the second door leaf is moveable to the open configuration when the first door leaf is in a closed configuration.

The first door leaf may comprise a sealing element. Some or all of the sealing element may overlap exteriorly with the second door leaf, when both leafs are in a closed configuration. The sealing element of the first door leaf may be configured to abut (e.g. contact and seal against) the second door leaf when in a closed configuration.

The sealing element may extend for some or all of the height of the first door leaf. The sealing element may be provided at an interface region, or substantially at an interface region, between the first and second door leafs. The sealing element may be removable/replaceable.

At least a portion of the second door leaf may overlap interiorly with the first door leaf, when both leafs are in a closed configuration. The second door leaf may comprise a sealing element. Some or all of the sealing element of the second door leaf may overlap interiorly with the first door leaf, when both leafs are in a closed configuration. The sealing element may extend for some or all of the height of the second door leaf. The sealing element of the second door leaf may be provided at the interface region between the first and second door leafs. The sealing element of the second door leaf may additionally or alternatively be removable/replaceable.

In some examples in which both the first door leaf and the second door leaf have a sealing element, then the sealing elements may be considered to overlap respective door leafs in a complementary manner. In such a way, the interior of the passenger door may be considered to be sealed from the exterior of the passenger door by the sealing element of the second door leaf and then the sealing element of the first door leaf.

The door system may comprise one or more locking mechanisms, configured to secure the first door leaf to the second door leaf, when both leafs are in a closed configuration. The locking mechanism(s) may be provided at the interface region between the first and second door leafs. The locking mechanism may be configured to assist with maintaining the first and second door leafs in the closed configuration (e.g. in the event of an accident, such as a rollover).

The locking mechanism may be configured to secure the first door leaf with the second door leaf by inhibiting out-of plane movement of the first door leaf with respect to the second door leaf. In other words, the locking mechanism may be configured to inhibit, or prevent, the first or second door leaf opening in a direction perpendicular to the plane of the other door leaf, when both leafs are in closed configuration.

The locking mechanism may be configured to secure the first/second door leaf, but to permit in-plane movement (or substantially in-plane movement) of the second door leaf with respect to the first door leaf, when in a closed configuration. In-plane movement may include movement of the second door leaf parallel, or roughly parallel, to the plane of the first door leaf. In-plane movement may include movement of the second door leaf with respect to first door leaf so as to provide a gap between the first and second door leafs.

The locking mechanism may comprise complementary retainers, configured to secure and retain the first and second door leafs. The retainers may comprise one or more retaining members and retaining latches, the members being locatable within the latches so as to inhibit any out of plane movement of the second door leaf.

A latch may be configured to surround a member so as to inhibit two degrees of freedom of the member, but to permit one degree of freedom of the member. The permitted one degree of freedom may allow relative movement of the member with respect to the latch so as to permit the second door leaf to be moveable to the open configuration when the first door leaf is in a closed configuration. The retaining member may be configured to slide from the latch, when the second door leaf is being moved to the open configuration. In similar words, the latch may be configured to surround the member when locked, but still permit the member to slide out from the latch.

The second door leaf may comprise a securing mechanism, for securing the second door leaf against a vehicle body, or a door frame of the door system, or the like. The door system may be configured to release the securing mechanism when the second door leaf is moved to the open configuration. Release of the securing mechanism may assist with movement of the second door leaf to the open configuration when the first door leaf is in a closed configuration. Release of the securing mechanism may assist with, or permit, removal of the retaining member from the retaining latch.

The door system may have powered modes of operation to power the door leafs to/from the open and closed configurations. For example, the door system may comprise an electric and/or pneumatic control system to power the door leafs to/from the open and closed configurations. The door system may comprise manual, or non-powered, modes of operation to move the doors at least from the closed to the open configuration (and possibly from the open to the closed configuration). The system may be configured such that the second door leaf is moveable to the open configuration in a manual mode of operation, when the first door leaf is in a closed configuration.

The control system (e.g. pneumatic and/or electric control system) may be configured to control the passenger door during powered modes of operation. The control system may comprise a driver interface, configured to be operable by a driver of a vehicle. The control system may comprise a passenger interface, configured to be operated by a passenger (e.g. in the event of an emergency). The passenger interface may be provided at the passenger door (e.g. as one or more passenger operable handles, which may be on one or both of the first and second door leafs).

The door system may have a first powered mode of operation in which the first door leaf only is moved between an open and closed configuration. Such a powered mode may be considered to be a passenger access mode. The first powered mode of operation may be controllable via the driver interface (e.g. the driver interface only).

The door system may comprise a second powered mode of operation in which both the first and second door leafs are movable to an open configuration. One or both of the doors may then been movable to a closed configuration. Such a powered mode may be considered an easy access mode. For example, the easy access mode may comprise a disabled access mode of operation in which the first and second door leafs are controlled to open via the driver interface. The easy access mode may comprise a emergency access mode of operation in which the first and second door leafs are controlled to open via the passenger interface.

The door system may comprise one or more manually-operated handles in order to operate the door leafs in manual, non-powered, modes of operation. Each of the door leafs may be operable independently in the manual mode of operation.

In manual mode, the first door leaf may be considered to be a passenger service and/or an emergency door, openable to permit passengers to enter and leave the vehicle. In manual mode, the second door leaf may be considered to be an emergency door, openable in the event of an emergency.

The passenger door may have a first door access area that is served by the first door leaf, and a second door access area that is served by the second door leaf. Both the first and second door access areas may cumulatively provide a passenger door access area. The first door access area may be greater than the second door access area. The height of the first door access area may be greater than the height of the second door access area.

The passenger door of the door system may be configured as a forward passenger door, positioned towards the front of a vehicle (e.g. opposite a driver area). In some examples, the forward passenger door may be the only passenger door. In further examples, the door system may comprise a further passenger door (e.g. having a single door leaf), located towards the middle or rear of a vehicle. In those examples, the door system may comprise only the forward passenger door, and the rear passenger door).

The door system may be configured for use with a coach-type passenger service vehicle. The coach-type vehicle may have essentially only a single passenger deck (albeit there may be provided a few passenger seats on lower sections of the vehicle also). The passenger deck may be elevated above a luggage locker area. In some examples of such vehicles, the passenger deck may extend for substantially the length of the vehicle, and so above a driver area. In some cases, the coach-type vehicle may be considered to be a double-deck vehicle (e.g. class 3 double-deck vehicle).

A portion of the passenger area of the passenger deck above the driver area may depend and occlude some of passenger access area provided by the second door leaf.

According to a further aspect of the invention, there is provided a door system for a passenger service vehicle, the system comprising:
a passenger door for providing passenger access to and from a vehicle, the passenger door having an interior and an exterior, and comprising a first door leaf and second door leaf, each of the first door leaf and the second door leaf having a closed configuration and an open configuration, the open configuration opening towards the exterior of the door;
at least a portion of the first door leaf overlapping exteriorly with the second door leaf when both leafs are in a closed configuration, and
the system being configured such that the second door leaf is moveable to the open configuration when the first door leaf is in a closed configuration.

According to a further aspect of the invention door system for a passenger service vehicle, the system comprising:
a passenger door for providing passenger access to and from a vehicle, the passenger door comprising a first door leaf and second door leaf, each of the first and second door leaf having a closed configuration and an open configuration, the open configuration being outward of a vehicle;
the first door leaf being sealed outwardly (e.g. relative to the exterior of a vehicle), against the second door leaf, and the second door leaf being sealed inwardly against the first door leaf, when both leafs are in a closed configuration, and
the system being configured such that the second door leaf is moveable to the open configuration (e.g. from behind the first door leaf), when the first door leaf is in a closed configuration.

According to a further aspect of the invention there is provided a door system for a passenger service vehicle, comprising:
a passenger door for providing passenger access to and from a vehicle, the passenger door comprising a first door leaf and second door leaf, each of the first and second door leafs having a closed configuration and an open configuration;
the first door leaf being configured as an service door for a vehicle and second door leaf configured as an emergency door of a vehicle.

According to a further aspect of the invention, there is provided a passenger service vehicle comprising a forward passenger door positioned towards the front of the vehicle, the forward passenger door having a door first door leaf and second door leaf, both the first and second door leafs having a closed configuration and an open configuration, and being independently controllable in order to provide access to the vehicle.

According to a further aspect of the invention, there is provide a passenger service vehicle comprising a passenger door, the passenger door having a first door access area and a second door access area, both of which cumulatively provide a passenger door access area, and wherein the first door access area is greater than the second door access area.

According to a further aspect of the invention, there is provided a passenger service vehicle comprising a forward passenger door positioned towards the front of the vehicle, opposite a driver area, and a rearward passenger door located towards the middle or rear of a vehicle.

The vehicle may comprise no further passenger doors. The vehicle may comprise a driver's door to allow access by the driver. Additionally/alternatively, the driver may in some cases gain access via the passenger door opposite the driver area.

The vehicle may be a coach-type passenger service vehicle. The coach-type vehicle may have essentially only a single passenger deck (albeit there may be provided a few passenger seats on lower sections of the vehicle also). The passenger deck may be elevated above a luggage locker area. In some examples of such vehicles, the passenger deck may extend for substantially the length of the vehicle, and so above a driver area.

A portion of the interior body of the passenger area above the driver area may depend in front of the passenger door (e.g. in front of a second door leaf of the passenger door). Features associated with particular recited embodiments relating to the door system, per se, may equally be appropriate as features of embodiments relating the passenger service vehicle, and vice versa. As will be appreciated, features associated with particular recited embodiments relating to methods, may be equally appropriate as features of embodiments relating specifically to apparatus, and vice versa.

It will also be appreciated that one or more embodiments/aspects may be useful for providing a door system and/or passenger doors for passenger service vehicles.

The above summary is intended to be merely exemplary and non-limiting.

### Brief Description of the Figures

A description is now given, by way of example only, with reference to the accompanying drawings, in which:-
Figures 1 a and 1 b show examples of passenger service vehicles;
Figure 2 shows an example of a forward passenger door of a vehicle similar to that shown in Figure 1b;
Figures 3a and 3b show exterior and interior of the door system shown in Figure 2;
Figure 4 shows a cross-section of the passenger door;
Figures 5a and 5b show a locking mechanism;
Figure 6 shows a control system of the door system; and
Figures 7a, 7b and 7c show various modes of operation of the door system.

### Description of Specific Embodiments

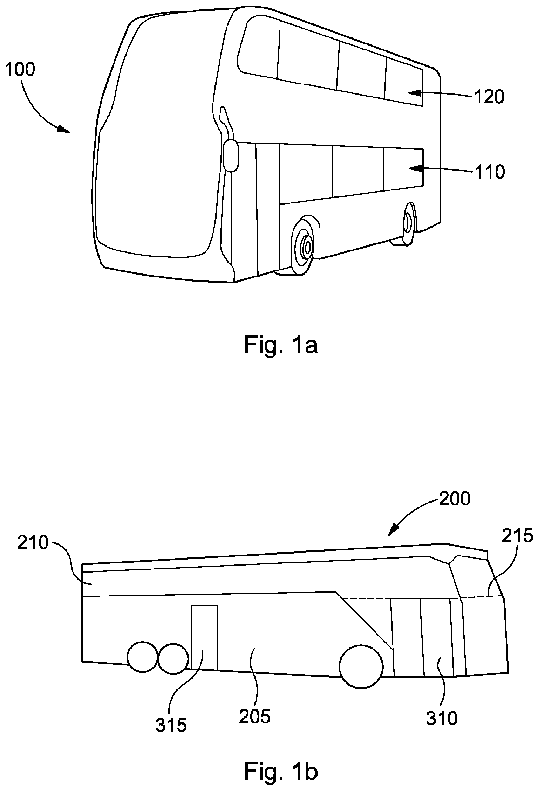

Figure 1a shows a perspective representation of a passenger service vehicle 100, which, in this example, is shown as a vehicle 100 having both a lower passenger deck 110 (lower deck) and an upper passenger deck 120 (upper deck). Such vehicles 100 are commonly referred to as twin-deck, or double-deck, vehicles 100, and comprise a plurality of passenger seats on each deck.

Figure 1b shows a perspective representation of an alternative passenger service vehicle 200, having essentially only a single passenger deck 210 (albeit there may be provided a few passenger seats on lower sections of the vehicle also). The vehicle 200 shown in Figure 1b can be considered to be a coach-type vehicle, in which the passenger deck 210 is elevated above a luggage locker area 205, or the like. In some examples of such vehicles 200, the passenger deck 210 may extend for substantially the length of the vehicle 200, and so above a driver area (as shown by the dashed lines 215). In some examples, such coach-type vehicles may be considered double-deck vehicles (e.g. class 3 double deck).

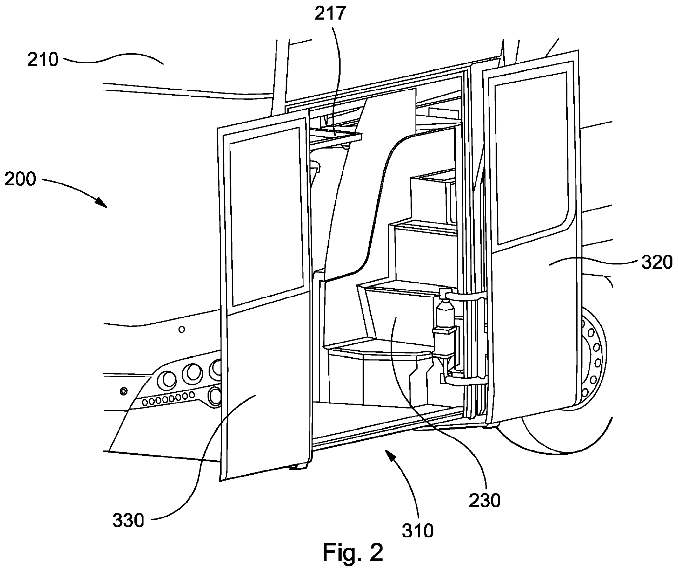

Figure 2 shows an example of a forward passenger door 310 of a coach-type vehicle 200 similar to that shown in Figure 1b. Here, although not shown in detail, the passenger deck 210 extends for substantially the length of the vehicle 200. The door 310 shown comprises a first door leaf 320 and second door leaf 330, both of which are shown in their open configuration. As is shown in Figure 2, both the first and second door leafs 320, 330 open outwardly from the vehicle 200. In other words, each door leaf 320, 330 opens to the exterior of the vehicle 200, rather than opening into the vehicle 200. Such a configuration can maximise the passenger door access area to the vehicle 200 (e.g. when compared to doors that open inwardly, and thus occupy access space).

As is shown in Figure 2, a portion 217 of the interior body of the passenger area essentially above a driver area depends in front of the passenger door 310, and in particular depends in front of a second door leaf 330 of the passenger door 310. As such, the passenger door 310 can be considered to have a first door access area and a second door access area associated with first and second door leafs 320, 330 respectively, both of which cumulatively provide a passenger door access area. However, shown here, the first door access area may be considered greater than the second door access area.

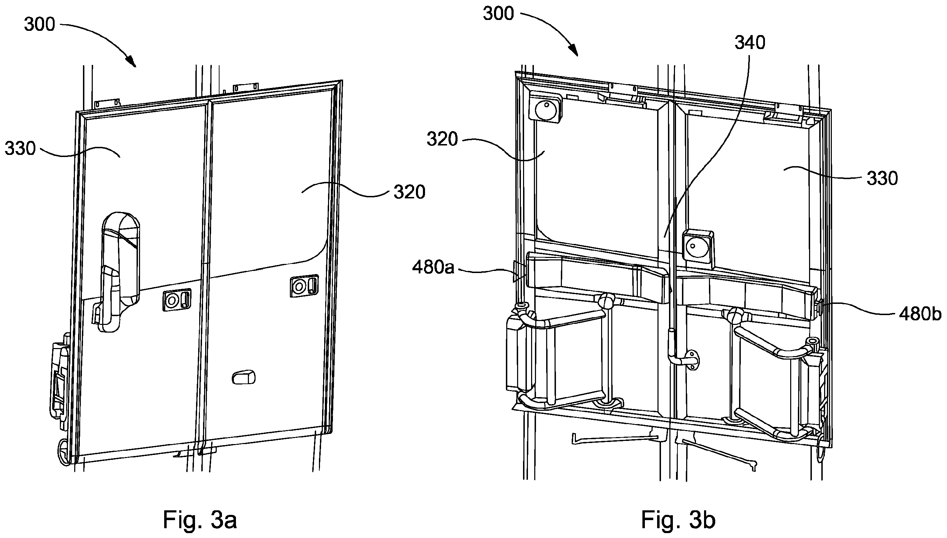

Figure 3a shows the exterior of the door system 300 as shown in Figure 2 (without the vehicle 200) and Figure 3b shows the interior of the door system 300. In Figure 3a and 3b, both of the first door leaf 320 and the second door leaf 330 are in a closed configuration. In an open configuration, both the first door leaf 320 and the second door leaf 330 open towards the exterior of the door 310 (as shown in Figure 2).

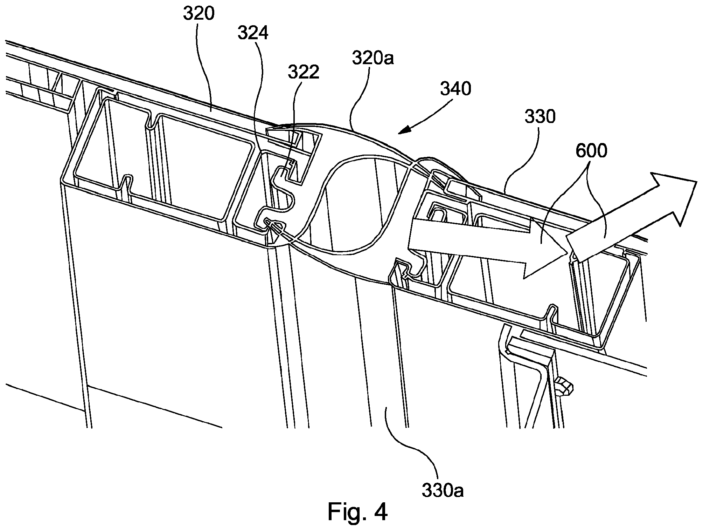

Figure 4 shows a cross-section of the passenger door 310, and shows an interface region 340 of the first door leaf 320 and the second door leaf 330, when both leafs 320, 330 are in a closed configuration. As will be described, at least a portion of the first door leaf 320 overlaps exteriorly with the second door leaf 330 when both leafs are in a closed configuration. In other words, the first door leaf 320 may be considered to be outermost of the passenger door 310, while the second door leaf may be considered innermost. In such a configuration, the first door leaf can readily be moved between the open and closed configuration when the second door leaf is closed.

Here, the first door leaf 320 comprises a sealing element 320a. As is shown, the first door leaf sealing element 320a overlaps exteriorly with the second door leaf 330, when both leafs 320, 330 are in a closed configuration. As such, the first door leaf 320 overlaps exteriorly with the second door leaf 330.

In this example, the sealing element 320a is deformably resilient, and configured to abut (e.g. contact and seal against) the second door leaf 330. The sealing element 320a presses against the second door leaf 330, and inhibits noise and air passing into the vehicle 100, 200, when travelling. In coach-type vehicle 200 such sealing effect can be particularly useful, principally given that such vehicle typically travel on major roads, and so usually travel at higher speeds than other urban-type passenger vehicles.

Although shown as a cross-section, the sealing element 320a extends for substantially the full height of the first door leaf 320. As is shown, the sealing element 320 is retained with the first door leaf 320 using retaining lugs 322 and a corresponding recess 324. As such, the sealing element can be removed (e.g. and replaced if worn).

In this particular example, the second door leaf 330 also comprises a sealing element 330a, similar to that of the first door leaf 320, but which overlaps interiorly with the first door leaf 320, when both leafs 320, 330 are in a closed configuration. Again, the sealing element of the second door leaf 330 is configured to abut (e.g. contact and seal against) the second door leaf 330.

In such examples in which both the first door leaf 320 and the second door leaf 330 have sealing elements, then the sealing effect can be increased further, when compared to only an outer sealing element. Here, the sealing elements 320a, 330a may be considered to overlap respective door leafs 320, 330 in a complementary manner, as shown in Figure 4. The interior of the passenger door 310 may be considered to be sealed from the exterior of the passenger door 310 at the interface 340 firstly by the sealing element of the second door leaf and then secondly by the sealing element of the outer first door leaf 320.

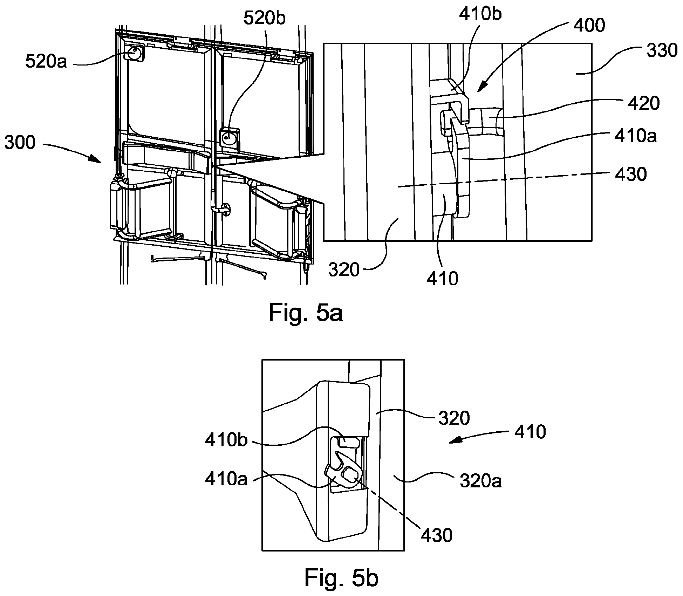

As is shown in Figure 5a, the door system 300 further comprises at least one locking mechanism 400, configured to secure the first door leaf 320 to the second door leaf 330, when both leafs 320, 330 are in a closed configuration. Although potentially provided at different positions, the locking mechanism 400 here is provided at the interface region 340 between the first and second door leafs 320, 330. The locking mechanism 400 is configured to assist with maintaining the first and second door leafs 320, 330 in the closed configuration, for example, in the event of an accident, such as a rollover. Again, such a passenger door 310 is particularly useful on coach-type vehicles 200.

As will be explained in detail below, the locking mechanism 400 is specifically configured to secure the first door leaf 320 with the second door leaf 330 by inhibiting out-of plane movement of the first door leaf 320 with respect to the second door leaf 330 (i.e. configured to inhibit, or prevent, the first or second door leaf opening in a direction perpendicular to the plane of the other door leaf). However, the mechanism 400 is further configured to permit in-plane movement (or substantially in-plane movement) of the second door leaf 330 with respect to the first door leaf 320. In-plane movement can include movement of the second door leaf 330 parallel, or roughly parallel, to the plane of the first door leaf 320. In other words, in-plane movement may allow the second door leaf 330 to move with respect to first door leaf so as to provide a gap at the interface region 340 between the first and second door leafs.

As is shown in Figure 5a the locking mechanism 400 comprises complementary retainers 410, 420, configured to secure and retain the first and second door leafs in the manner described. The retainers 410, 420 comprise a retaining member 410 and a retaining latch 420 (in further examples more than one of each may be provided). Here, the member 410 is provided with the second door leaf 330 and is locatable within the latch 420 provided with the first door leaf 320 so as to inhibit any relative out-of-plane movement.

The latch 410 comprises a receiving portion 410a, and a retaining portion 410b. Figure 5b shows the latch 410 on the first door leaf 320, when the first door leaf is open. The receiving portion 410a is arranged to receive the member 420 on the second door leaf 330 and, upon receipt, rotates about an axis 430 to a locked position, as shown in Figure 5a. In use, the latch 410 is configured to surround the member 420 when locked so as to essentially inhibit two degrees of freedom (e.g. x and y axis) of the member 420, but to permit one degree of freedom (e.g. z axis, shown as 430) of the member 420.

Here, the first and second door leafs 320, 330 further comprise securing mechanisms 480a, 480b, for securing the door leafs 320, 330 against a vehicle body, or a door frame of the door system, or the like (shown in Figure 3b). The securing mechanisms 480a, 480b assist to retain the door leafs 320, 330 in the closed configuration. The securing mechanism may comprise a latch and a member, in a similar manner to the locking mechanism, or may be provided by a different securing means.

In use, the door system 300 has powered modes of operation in which the door leafs are powered to/from the open and closed configurations, as well as non-powered, or manual modes of operation (e.g. in which manual handles provided with the doors allow at least movement from the closed to the open configuration, and possibly from the open to the closed configuration).

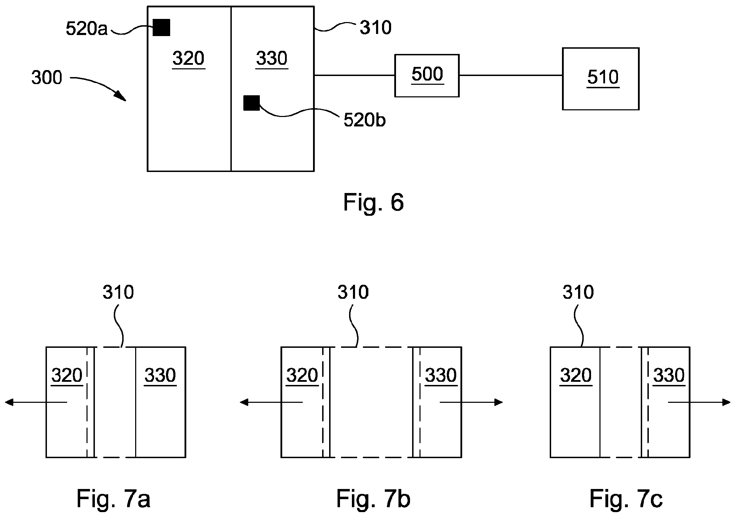

For powered operation, the door system comprises an electric and/or pneumatic control system 500, as shown in a simplified manner in Figure 6. The control system 500 comprises a driver interface 510, configured to be operable by a driver of a vehicle 200. The control system 500 further comprises a passenger interface 520a, 520b, configured to be operated by a passenger (e.g. in the event of an emergency). In this example, the passenger interface 520a, 520b is provided at the passenger door 310, and is shown as passenger operable handles 520a, 520b on each door leaf 320, 330.

In a first powered mode of operation shown in Figure 7a, the drive interface 510 is usable to operate the control system 500, which in turn controls the locking mechanism 400, securing mechanism 480a and various hinges, etc., to operate the first door leaf 320 only between an open and closed configuration. As the first door leaf 320 sealed outwardly (e.g. relative to the exterior of the vehicle 200), against the second door leaf 330, the first door leaf 320 is readily able to open and close. Such a powered mode may be considered to be a passenger access mode, and may be usable to allow passengers on and off the vehicle 200.

In a second powered mode of operation, both the first and second door leafs 320, 330 are movable to an open configuration, as is shown in Figure 7b. In the example given, the first door leaf 320 begins to open slightly before the second door leaf 330, to allow both leafs 320, 330 to open. When closing, the second door leaf 320 is closed before (e.g. slightly before) the first door leaf 320. Such a powered mode of operation may be considered to be an easy access mode. For example, the easy access mode may readily allow disabled access (e.g. wheelchair access) when the first and second door leafs 320, 330 are controlled via the driver interface 510, or emergency access mode of operation when controlled to open via the passenger interface 520a, 520b.

In addition to the powered mode of operation, the door system 300 comprises manually-operated handles in order to operate the door leafs 320, 330 in manual, non-powered, modes of operation. Such manual non-powered mode may be used, for example, in the event of an emergency (e.g. when power is lost). Here, each of the door leafs 320, 330 are operable independently in the manual mode of operation, as will be described. Further, the manually-operated handles are provided by the passenger interface 520a, 520b (in different embodiments, different handles may be used).

In manual mode, the first door leaf 320 is opened using the passenger interface 520a of that leaf 320. Actuation of the passenger interface (i.e. manual handle) causes the retaining portion 410a of the latch 410 of the locking mechanism 400 to rotate and allow release of retaining member 420. In addition, the securing mechanism 480a of that leaf 320 is also unlatched. As such, a passenger is then manually able to apply force to the door in order to open the first door leaf 320.

In manual mode, the second door leaf 330 can be opened using the passenger interface 520b of that leaf 330. Actuation of the passenger interface (i.e. manual handle) causes the securing mechanism to release. Although the locking mechanism 400 is not actuated from the passenger interface 520b of the second leaf 330, the permitted degree of freedom nevertheless allows relative movement (i.e. in-plane movement) of the member 420 with respect to the latch 410. As such, the member 420 can essentially slide out from the latch 410. As shown by arrows 600 in Figure 4, the system 300 is therefore configured such that the second door leaf 330 is moveable to the open configuration when the first door leaf 320 is in a closed configuration, even though at least a portion of the first door leaf 320 overlaps exteriorly with the second door leaf 330 when both leafs 320, 330 are in a closed configuration. As a result, the second door leaf 330 can also operate as an emergency door, even in the event of no power, as is shown in Figure 7c. In such cases, the second door leaf may be operable to open in manual mode in eight seconds or less.

In the example described, the passenger door 310 of the door system 300 is configured as a forward passenger door, positioned towards the front of a vehicle 300 (e.g. opposite a driver area). In some examples, the forward passenger door may be the only passenger door. In other words, given the operation of the first door leaf as an service door and the second door leaf as an emergency door, then in some example no further passenger doors or emergency doors may be provided.

However, in further examples, the door system 300 may comprise a further door 315 (e.g. having a single door leaf, which may or not be an emergency door), which located towards the middle or rear of a vehicle (as shown in Figure 1b). In some of those examples, the door system 300 may comprise only the forward passenger door 310, and a rear passenger door 315. In other words, again, given the operation of the first door leaf and second door leaf, then no further emergency doors may be provided outwith the provision of the forward passenger door 310. Of course, in some further examples, the rear door 315 may additionally be an emergency door.

It will be appreciated that any of the aforementioned door leafs, locking mechanisms, securing mechanisms, etc., may have other functions in addition to the mentioned functions, and that these functions may be performed by the same apparatus.

Further, while in the above embodiments the use of a particular locking mechanism is exemplified by the use of a latch and member, it will be appreciated that different configurations of locking mechanisms (and other features of the door) may be used, which permit the second door leaf to be moveable to the open configuration when the first door leaf is in a closed configuration. A skilled reader will readily be able to implement those further embodiments accordingly.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims.

## Claims

1. A door system (300) for a passenger service vehicle (100, 200), the system comprising:
a passenger door (310) for providing passenger access to and from a vehicle (100, 200), the passenger door (310) having an interior and an exterior, and comprising a first door leaf (320) and second door leaf (330), each of the first door leaf and the second door leaf (320, 330) having a closed configuration and an open configuration, the open configuration opening towards the exterior of the door (310);
at least a portion of the first door leaf (320) overlapping exteriorly with the second door leaf (330) when both leafs are in a closed configuration, **characterised in that** the system (300) comprises a locking mechanism (400), provided at an interface region between the first and second door leafs (320, 330), and comprising a retaining member (410) and retaining latch (420), the retaining latch (420) being configured to surround the retaining member (410) so as to inhibit two degrees of freedom of the member (410), but to permit one degree of freedom of the member (410) to allow the member (410) to slidably release from the latch (420), such that the locking mechanism (400) is configured to secure the first door leaf (320) with the second door leaf (330) by inhibiting out-of plane movement of the first door leaf (320) with respect to the second door leaf (330), but to permit in-plane movement of the second door leaf (330) with respect to the first door leaf (320), when in a closed configuration so that the second door leaf (330) is moveable to the open configuration when the first door leaf (320) is in a closed configuration.

2. The system according to claim 1, wherein the first door leaf (320) comprises a sealing element (320a), and the sealing element (320a) overlaps exteriorly with the second door leaf (330), when both leafs (320, 330) are in a closed configuration, the sealing element (320a) being configured to contact and seal against the second door leaf (330) when in a closed configuration.

3. The system according to claim 1 or 2, wherein at least a portion of the second door leaf (330) overlaps interiorly with the first door leaf (320), when both leafs are in a closed configuration.

4. The system according to claim 3, wherein the second door leaf (330) comprises a sealing element (330a), and the sealing element (330a) overlaps interiorly with the first door leaf (320), when both leafs are in a closed configuration, the sealing element (330a) being configured to contact and seal against the first door leaf (320) when in a closed configuration.

5. The system according to any preceding claim wherein at least the second door leaf (330) comprises a securing mechanism for securing the second door leaf (330) against a vehicle body, or a door frame of the door system, when in a closed configuration.

6. The door system according to any preceding claim having powered modes of operation to power the door leafs (320, 330) to/from the open and closed configuration and manual, or non-powered, modes of operation to move the doors at least from the closed to the open configuration.

7. The system according to claim 6, wherein the second door leaf (330) is moveable to the open configuration in a manual mode of operation, when the first door leaf (320) is in a closed configuration.

8. The system according to any of the claims 6 or 7, comprising a pneumatic and/or electric control system configured to control the passenger door during powered modes of operation, control system having a driver interface, configured to be operable by a driver of a vehicle and a passenger interface, configured to be operated by a passenger.

9. The system according to any preceding claim, wherein door system (300) has a first powered mode of operation in which the first door leaf (320) only is moved between an open and closed configuration, and optionally wherein the door system (300) comprises a second powered mode of operation in which both the first and second door leafs (320, 330) are movable to an open configuration.

10. The system according to any preceding claim, wherein each of the door leafs (320, 330) are operable independently in a manual mode of operation, and optionally wherein the second door leaf (330) is configured as an emergency door, openable in the event of an emergency.

11. The system according to any preceding claim, wherein the passenger door is a forward passenger door, configured to be positioned towards the front of a vehicle (100, 200), opposite a driver area.

12. The system according to any preceding claim configured for use with a coach-type passenger service vehicle.

13. A passenger service vehicle (100, 200) comprising a door system according to any of the preceding claims.

14. A vehicle according to claim 13, wherein the vehicle is a coach-type vehicle.

15. The vehicle according to claim 13 or 14, wherein the vehicle comprises a forward passenger door positioned towards the front of the vehicle, opposite a driver area, and a rearward passenger door located towards the middle or rear of the vehicle only.

## Patentansprüche

1. Türsystem (300) für ein Personenbeförderungsfahrzeug (100, 200), wobei das System Folgendes umfasst:
eine Fahrgasttür (310) zum Gewähren eines Fahrgastzugangs zu und aus einem Fahrzeug (100, 200), wobei die Fahrgasttür (310) ein Inneres und ein Äußeres hat und ein erstes Türblatt (320) und ein zweites Türblatt (330) umfasst, wobei sowohl das erste Türblatt als auch das zweite Türblatt (320, 330) eine geschlossene Konfiguration und eine offene Konfiguration hat, wobei die offene Konfiguration zum Äußeren der Tür (310) hin öffnet,
wenigstens einen Abschnitt des ersten Türblatts (320), der außen mit dem zweiten Türblatt (330) überlappt, wenn sich beide Blätter in einer geschlossenen Konfiguration befinden,
**dadurch gekennzeichnet, dass** das System (300) einen Verriegelungsmechanismus (400) umfasst, der an einem Grenzflächenbereich zwischen dem ersten und dem zweiten Türblatt (320, 330) bereitgestellt wird und ein Rückhalteelement (410) und eine Rückhalteklinke (420) umfasst, wobei die Rückhalteklinke (420) dafür konfiguriert ist, das Rückhalteelement (410) zu umschließen, um so zwei Freiheitsgrade des Elements (410) zu hemmen, aber einen Freiheitsgrad des Elements (410) zu erlauben, um zu ermöglichen, dass sich das Element (410) verschiebbar von der Klinke (420) löst, so dass der Verriegelungsmechanismus (400) dafür konfiguriert ist, das erste Türblatt (320) mit dem zweiten Türblatt (330) zu sichern durch das Hemmen einer Bewegung des ersten Türblatts (320) aus der Ebene in Bezug auf das zweite Türblatt (330), aber eine Bewegung des zweiten Türblatts (330) in der Ebene in Bezug auf das erste Türblatt (320) zu erlauben, wenn es sich in einer geschlossenen Konfiguration befindet, so dass das zweite Türblatt (330) zu der offenen Konfiguration beweglich ist, wenn sich das erste Türblatt (320) in einer geschlossenen Konfiguration befindet.

2. System nach Anspruch 1, wobei das erste Türblatt (320) ein Abdichtungselement (320a) umfasst und das Abdichtungselement (320a) außen mit dem zweiten Türblatt (330) überlappt, wenn sich beide Blätter (320, 330) in einer geschlossenen Konfiguration befinden, wobei das Abdichtungselement (320a) dafür konfiguriert ist, das zweite Türblatt (330), wenn es sich in einer geschlossenen Konfiguration befindet, zu berühren und gegenüber demselben abzudichten.

3. System nach Anspruch 1 oder 2, wobei wenigstens ein Abschnitt des zweiten Türblatts (330) innen mit dem ersten Türblatt (320) überlappt, wenn sich beide Blätter in einer geschlossenen Konfiguration befinden.

4. System nach Anspruch 3, wobei das zweite Türblatt (330) ein Abdichtungselement (330a) umfasst und das Abdichtungselement (330a) innen mit dem ersten Türblatt (320) überlappt, wenn sich beide Blätter in einer geschlossenen Konfiguration befinden, wobei das Abdichtungselement (330a) dafür konfiguriert ist, das erste Türblatt (320), wenn es sich in einer geschlossenen Konfiguration befindet, zu berühren und gegenüber demselben abzudichten.

5. System nach einem der vorhergehenden Ansprüche, wobei wenigstens das zweite Türblatt (330) einen Sicherungsmechanismus zum Sichern des zweiten Türblatts (330) an einem Fahrzeugaufbau oder einem Türrahmen des Türsystems, wenn es sich in einer geschlossenen Konfiguration befindet, umfasst.

6. System nach einem der vorhergehenden Ansprüche, das Betriebsmodi mit Antrieb, um die Türblätter (320, 330) zu/von der offenen und der geschlossenen Konfiguration anzutreiben, und manuelle Betriebsmodi, ohne Antrieb, um die Türen wenigstens von der geschlossenen zu der offenen Konfiguration anzutreiben, hat.

7. System nach Anspruch 6, wobei das zweite Türblatt (330) in einem manuellen Betriebsmodus zu der offenen Konfiguration beweglich ist, wenn sich das erste Türblatt (320) in einer geschlossenen Konfiguration befindet.

8. System nach einem der Ansprüche 6 oder 7, das ein pneumatisches und/oder elektrisches Steuerungssystem umfasst, das dafür konfiguriert ist, die Fahrgasttür während Betriebsmodi mit Antrieb zu steuern, wobei das Steuerungssystem eine Fahrerschnittstelle, die dafür konfiguriert ist, durch einen Fahrer eines Fahrzeugs bedienbar zu sein, und eine Fahrgastschnittstelle, die dafür konfiguriert ist, durch einen Fahrgast bedienbar zu sein, hat.

9. System nach einem der vorhergehenden Ansprüche, wobei das Türsystem (300) einen ersten Betriebsmodus mit Antrieb hat, in dem nur das erste Türblatt (320) zwischen einer offenen und einer geschlossenen Konfiguration bewegt wird, und wobei wahlweise das Türsystem (300) einen zweiten Betriebsmodus mit Antrieb hat, in dem sowohl das erste als auch das zweite Türblatt (320, 330) zu einer offenen Konfiguration beweglich ist.

10. System nach einem der vorhergehenden Ansprüche, wobei jedes der Türblätter (320, 330) in einem manuellen Betriebsmodus unabhängig bedienbar ist und wobei wahlweise das zweite Türblatt (330) als eine Notfalltür konfiguriert ist, die beim Auftreten eines Notfalls zu öffnen ist.

11. System nach einem der vorhergehenden Ansprüche, wobei die Fahrgasttür eine vordere Fahrgasttür ist, die dafür konfiguriert ist, zum Vorderteil eines Fahrzeugs (100, 200) hin, gegenüber einem Fahrerbereich, angeordnet zu sein.

12. System nach einem der vorhergehenden Ansprüche, das zur Verwendung mit einem Personenbeförderungsfahrzeug vom Bustyp konfiguriert ist.

13. Personenbeförderungsfahrzeug (100, 200), das ein Türsystem nach einem der vorhergehenden Ansprüche umfasst.

14. Fahrzeug nach Anspruch 13, wobei das Fahrzeug ein Fahrzeug von Bustyp ist.

15. Fahrzeug nach Anspruch 13 oder 14, wobei das Fahrzeug eine vordere Fahrgasttür, die zum Vorderteil des Fahrzeugs hin, gegenüber einem Fahrerbereich, angeordnet ist, und eine hintere Fahrgasttür, die sich zu der Mitte oder dem Heck des Fahrzeugs hin befindet, umfasst.

## Revendications

1. Système de porte (300) pour un véhicule de service de passagers (100, 200), le système comprenant :
une porte passager (310) permettant de fournir un accès à des passagers vers et à partir d'un véhicule (100, 200), la porte passager (310) présentant un intérieur et un extérieur, et comprenant un premier battant de porte (320) et un deuxième battant de porte (330), chacun parmi le premier battant de porte et le deuxième battant de porte (320, 330) présentant une configuration fermée et une configuration ouverte, la configuration ouverte s'ouvrant vers l'extérieur de la porte (310) ;
au moins une partie du premier battant de porte (320) chevauchant extérieurement le deuxième battant de porte (330) lorsque les deux battants sont dans une configuration fermée,
**caractérisé en ce que** le système (300) comprend
un mécanisme de verrouillage (400), fourni au niveau d'une région d'interface entre les premier et deuxième battants de porte (320, 330), et comprenant un élément de retenue (410) et un loquet de retenue (420), le loquet de retenue (420) étant configuré pour entourer l'élément de retenue (410) de manière à empêcher deux degrés de liberté de l'élément (410), mais à permettre un degré de liberté de l'élément (410) afin de permettre à l'élément (410) de se libérer de manière coulissante du loquet (420), de telle manière que le mécanisme de verrouillage (400) est configuré pour immobiliser le premier battant de porte (320) avec le deuxième battant de porte (330) en empêchant un déplacement hors du plan du premier battant de porte (320) par rapport au deuxième battant de porte (330), mais en permettant un déplacement dans le plan du deuxième battant de porte (330) par rapport au premier battant de porte (320), lorsqu'il est dans une configuration fermée, de sorte que le deuxième battant de porte (330) peut être déplacé vers la configuration ouverte lorsque le premier battant de porte (320) est dans une configuration fermée.

2. Système selon la revendication 1, dans lequel le premier battant de porte (320) comprend un élément d'étanchéité (320a), et l'élément d'étanchéité (320a) chevauche extérieurement le deuxième battant de porte (330), lorsque les deux battants (320, 330) sont dans une configuration fermée, l'élément d'étanchéité (320a) étant configuré pour venir en contact avec et fournir une fermeture étanche contre le deuxième battant de porte (330) lorsqu'il est dans une configuration fermée.

3. Système selon la revendication 1 ou 2, dans lequel au moins une partie du deuxième battant de porte (330) chevauche intérieurement le premier battant de porte (320), lorsque les deux battants sont dans une configuration fermée.

4. Système selon la revendication 3, dans lequel le deuxième battant de porte (330) comprend un élément d'étanchéité (330a), et l'élément d'étanchéité (330a) chevauche intérieurement le premier battant de porte (320), lorsque les deux battants sont dans une configuration fermée, l'élément d'étanchéité (330a) étant configuré pour venir en contact avec et fournir une fermeture étanche contre le premier battant de porte (320) lorsqu'il est dans une configuration fermée.

5. Système selon l'une quelconque des revendications précédentes, dans lequel au moins le deuxième battant de porte (330) comprend un mécanisme d'immobilisation permettant d'immobiliser le deuxième battant de porte (330) contre une carrosserie de véhicule, ou un cadre de porte du système de porte, lorsqu'il est dans une configuration fermée.

6. Système selon l'une quelconque des revendications précédentes, présentant des modes de fonctionnement alimentés en énergie afin d'alimenter en énergie les battants de porte (320, 330) vers/à partir des configurations ouverte et fermée et des modes de fonctionnement manuels, ou non alimentés en énergie, afin de déplacer les portes au moins à partir de la configuration fermée vers la configuration ouverte.

7. Système selon la revendication 6, dans lequel le deuxième battant de porte (330) peut être déplacé vers la configuration ouverte dans un mode de fonctionnement manuel, lorsque le premier battant de porte (320) est dans une configuration fermée.

8. Système selon la revendication 6 ou 7, comprenant un système de commande pneumatique et/ou électrique configuré pour commander la porte passager pendant des modes de fonctionnement alimentés en énergie, le système de commande présentant une interface conducteur, configurée pour être utilisée par un conducteur d'un véhicule et une interface passager, configurée pour être utilisée par un passager.

9. Système selon l'une quelconque des revendications précédentes, dans lequel le système de porte (300) présente un premier mode de fonctionnement alimenté en énergie dans lequel le premier battant de porte (320) seulement est déplacé entre une configuration ouverte et une configuration fermée, et éventuellement dans lequel le système de porte (300) comprend un deuxième mode de fonctionnement alimenté en énergie dans lequel les premier et deuxième battants de porte (320, 330) peuvent tous deux être déplacés vers une configuration ouverte.

10. Système selon l'une quelconque des revendications précédentes, dans lequel chacun des battants de porte (320, 330) peut être utilisé de manière indépendante dans un mode de fonctionnement manuel, et éventuellement dans lequel le deuxième battant de porte (330) est configuré en tant que porte de secours pouvant être ouverte en cas d'urgence.

11. Système selon l'une quelconque des revendications précédentes, dans lequel la porte passager est une porte passager avant, configurée pour être positionnée vers l'avant d'un véhicule (100, 200), face à une zone conducteur.

12. Système selon l'une quelconque des revendications précédentes, configuré pour une utilisation avec un véhicule de service de passagers de type autocar.

13. Véhicule de service de passagers (100, 200) comprenant un système de porte selon l'une quelconque des revendications précédentes.

14. Véhicule selon la revendication 13, dans lequel ledit véhicule est un véhicule de type autocar.

15. Véhicule selon la revendication 13 ou 14, dans lequel ledit véhicule comprend une porte passager avant positionnée vers l'avant du véhicule, face à une zone conducteur, et une porte passager arrière située uniquement vers le milieu ou l'arrière du véhicule.
